(19) Europäisches Patentamt
European Patent Office
Office européen des brevets

(11) **EP 3 261 208 B1**

(12) **EUROPEAN PATENT SPECIFICATION**

(45) Date of publication and mention
of the grant of the patent:
**27.03.2019 Bulletin 2019/13**

(51) Int Cl.:
*H02J 1/00* *(2006.01)*   *H02J 3/24* *(2006.01)*
*H02J 3/36* *(2006.01)*

(21) Application number: **16752356.2**

(22) Date of filing: **09.02.2016**

(86) International application number:
**PCT/JP2016/053821**

(87) International publication number:
**WO 2016/132970 (25.08.2016 Gazette 2016/34)**

(54) **CONTROL DEVICE OF POWER CONVERTER**

STEUERUNGSVORRICHTUNG EINES LEISTUNGSWANDLERS

DISPOSITIF DE COMMANDE DE CONVERTISSEUR DE PUISSANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.02.2015 JP 2015030097**

(43) Date of publication of application:
**27.12.2017 Bulletin 2017/52**

(73) Proprietor: **Kabushiki Kaisha Toshiba
Minato-ku
Tokyo 105-8001 (JP)**

(72) Inventors:
• **WANG, Mian
  Tokyo 105-8001 (JP)**
• **NORO, Yasuhiro
  Tokyo 105-8001 (JP)**
• **NAOI, Shinya
  Tokyo 105-8001 (JP)**

• **KINOSHITA, Yoshihito
  Tokyo 105-8001 (JP)**
• **TAMURA, Yuuji
  Tokyo 105-8001 (JP)**

(74) Representative: **AWA Sweden AB
P.O. Box 11394
404 28 Göteborg (SE)**

(56) References cited:
**US-A1- 2012 112 713    US-A1- 2012 250 371**

• **HISASHI OI ET AL.: 'Development of Advanced
Multi-terminal HVDC Control and Protection
Systems and Simulator Tests' THE
TRANSACTIONS OF THE INSTITUTE OF
ELECTRICAL ENGINEERS OF JAPAN . B, A
PUBLICATION OF POWER AND ENERGY
SOCIETY vol. 117, no. 7, 19 December 2008, pages
967 - 974, XP055473925**

**Description**

FIELD

Embodiments of the present disclosure relate to a control device of a power converter that mutually converts power between DC and AC.

BACKGROUND

DC power transmission systems are utilized for, for example, cases in which power is supplied between AC systems having different commercial frequencies. A DC power transmission system includes two power converters connected to different AC systems, respectively, to perform power conversion from AC to DC or from DC to AC, and a DC line connecting the two power converters via a DC reactor.

A power converter that performs power conversion from AC to DC is called a rectifier, while a power converter that performs power conversion from DC to AC is called an inverter. When, for example, an AC system A and an AC system B having different frequencies are connected via a DC power transmission system, and power is supplied from the AC system A to the AC system B, the power converter at the AC-system-A side operates as a rectifier, while the power converter at the AC-system-B side operates as an inverter.

A control device is connected to the power converter. This control device calculates the control angle on the power converter based on the set values of a DC current and a DC voltage, and the detected current and detected voltage of the DC line, and controls the power converter based on the control angle.

In an HVDC (High Voltage Direct Current) system operated in the constant power control mode, a VDCOL (Voltage Dependent Current Order Limiter) is adopted to the control device in order to prevent unbalancing of reactive power and voltage and commutation failure at the time of a fault in an AC system.

VDCOL limits the DC current instruction value according to the DC voltage. That is, the HVDC system is normally operated in the constant power control mode, and the rectifier at the power transmitting side is operated in the constant current control mode, while the inverter at the power receiving side is operated in the constant voltage control mode. When the DC voltage decreases due to an AC fault, since the system is operated in the constant power control mode, if there is no VDCOL, the mode acts in the direction increasing the DC current and the reactive power consumption further increases, and a continuous commutation failure may occur. However, by limiting the DC current instruction value according to the decreased DC voltage by the VDCOL to set a further small value, a further increase in reactive power and a voltage stress on a valve can be addressed.

CITATION LIST

US2012/250371 discloses a method of controlling an inverter device, a control device as well as an inverter device and a direct current power transmission system. The direct current power transmission system is provided for connection to an AC voltage bus of an AC power system and comprises the control device and the inverter device that converts between DC power and AC power. The control device receives measurements of the voltage at the AC voltage bus and controls the inverter device to provide a constant AC voltage on the bus.

NON-PATENT LITERATURES

Non-Patent Document 1: "Selection of Dynamic Performance Control Parameters for Classic HVDC in PSSE Optimization of CCA and VDCOL parameters", Arunkumar Muthusamy, Master of Science Thesis, Department of Electric Power Engineering, Division of Energy and Environment, Chalmers University of Technology, 2011.

In the DC power transmission system as described above, in the case of a separate-excitation DC power transmission system using a thyristor, etc., there may be cases the commutation failure is unavoidable due to a fault in the AC system at the power receiving side. In particular, in a system that transmits power using long-distance cables, it takes a long time to charge the power transmission cables, and even if a fault is eliminated, it takes a time to recover the transmission power.

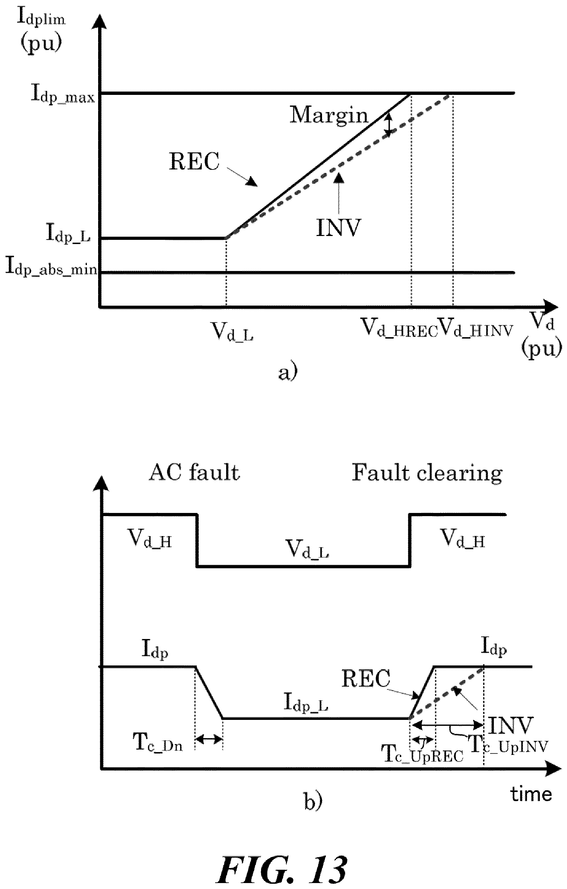

As illustrated in FIG. 13(a), the VDCOL characteristic is a graph (function) having a horizontal axis indicating the DC voltage and a vertical axis indicating the limit value of the DC voltage instruction value, and has two break points of high and low. According to a general VDCOL characteristic, when observing the limit value of the DC current instruction value on the vertical axis in the direction from the large value to the small value of DC voltage $Vd$, the upper limit of the DC current instruction value is at constant upper limit $Idp\_max$ until the high break point $Vd\_H$ (Higher breakpoint) where the DC voltage $Vd$ is large, and is linearly downwardly limited when it is from the high break point $Vd\_H$ to the low break point $Vd\_L$ (Lower breakpoint). In addition, when the DC voltage $Vd$ becomes equal to or smaller than $Vd\_L$ (Lower breakpoint), the DC current instruction value is limited to a constant $Idp\_L$.

The VDCOL characteristic is provided at both the power transmitting side (REC side) and the power receiving side (INV side), and their characteristics are generally the same characteristics. According to Non-Patent Document 1, in order to prevent a continuous commutation failure, the power transmitting side and the power receiving side have substantially the same characteristics, and by adjusting the time constant of the nonlinear first order delay, the stability at the time of fault recovery is attempted.

More specifically, as illustrated in FIG. 13(b), the time constant Tc_Dn at the time of the AC fault where the DC voltage Vd decreases is set to the same at both the power transmitting side (REC side) and the power receiving side (INV side), and the time constant Td_Up at the time of recovery from the fault elimination where the DC voltage Vd increases is set in a way that the time constant Td_Up INV at the power receiving side becomes greater than the time constant Td_Up REC at the power transmitting side.

However, Non-Patent Document 1 is not made in consideration of a reduction of the recovery time of transmission power from a fault elimination. When, for example, the DC voltage greatly decreases, since there is substantially no difference between the DC current instruction limiter of the power transmitting side and the power receiving side, it takes a time to charge the long-distance cable, and the recovery time becomes long. In addition, similarly when the transmission power is small, since there is also substantially no difference in the DC current instruction limiter, in particular when the initial operation point is lower than the lower limit value Idp L of the DC current instruction value, the difference disappears, and there is a possibility that the recovery time becomes long.

SUMMARY

A power converter according to embodiments of the present disclosure has been made to address the above technical problem, and an objective is to provide a control device of a power converter capable of reducing the charging time of the DC line and the recovery time of transmission power.

In order to achieve the above objective, a control device according to an embodiment is a control device of power converters that perform power conversion between two power systems connected together via a DC line, the power converter operating as a rectifier, and the power converter operating as an inverter, and the control device includes:

a constant power control circuit outputting a control angle so as to cause DC power to follow a DC power set value;
a VDCOL control circuit having VDCOL characteristics limiting a DC current instruction value based on a DC voltage;
a constant current control circuit outputting a control angle so as to cause a DC current of the DC line to follow the DC current set value set based on the VDCOL characteristics;
a constant voltage control circuit outputting a control angle so as to cause the DC voltage of the DC line to follow a DC voltage set value;
a constant margin angle control circuit outputting a control angle so as to make a margin angle for the power converter constant, and

a minimum value selection circuit setting, as the control angle for the power converter, the minimum value of the control angles for the constant current control circuit, the constant voltage control circuit, and the constant margin angle control circuit, wherein:

the VDCOL control circuit has different VDCOL characteristics at the rectifier side and the inverter side, respectively; and
each of the VDCOL characteristic has two break points of high and low for the DC voltage, an upper limit value of the DC current instruction value within a region between the high and low break points is set to be lower at the inverter side than the rectifier side, and the low break points of the respective VDCOL characteristics are consistent, the upper limit value of the DC current instruction value within the region equal to or smaller than the low break point is set to be lower at the inverter side than the rectifier side.

BRIEF DESCRIPTION OF DRAWINGS

FIG. 1 is a diagram illustrating a circuit structure of a DC power transmission system and that of a control device of a power converter according to a first embodiment;
FIG. 2 is a diagram illustrating a VDCOL characteristic in a VDCOL control circuit according to the first embodiment;
FIGS. 3(a) and 3(b) are diagrams illustrating a DC voltage recovery and a transmission power recovery by the control device of the power converter according to the first embodiment, and FIG. 3(a) is a DC voltage waveform, while FIG. 3(b) is a DC current waveform, and FIG. 3(c) is an AC power waveform;
FIG. 4 is a diagram illustrating a VDCOL characteristic in a VDCOL control circuit according to a second embodiment;
FIG. 5 is a diagram illustrating a VDCOL characteristic in a VDCOL control circuit according to a third embodiment;
FIG. 6 is a diagram illustrating a modified example of the VDCOL characteristic in the VDCOL control circuit according to the first to third embodiments;
FIG. 7 is a diagram illustrating a VDCOL control circuit according to a fourth embodiment;
FIG. 8 is a diagram illustrating a control circuit that is a part of a control device of a power converter according to a fifth embodiment;
FIG. 9 is an operation explanatory diagram at different initial operation points;
FIG. 10 is a diagram illustrating a VDCOL characteristic in a VDCOL control circuit according to a sixth embodiment;

FIG. 11 is a diagram illustrating a VDCOL control circuit according to the sixth embodiment;

FIG. 12 is a diagram illustrating a VDCOL characteristic in the VDCOL control circuit according to the sixth embodiment; and

FIG. 13(a) is a diagram illustrating a VDCOL characteristic in a conventional VDCOL control circuit, and FIG. 13(b) is a graph of a DC voltage and a DC current instruction value indicated in time series.

DETAILED DESCRIPTION

[1. First Embodiment]

[1-1. Entire Structure]

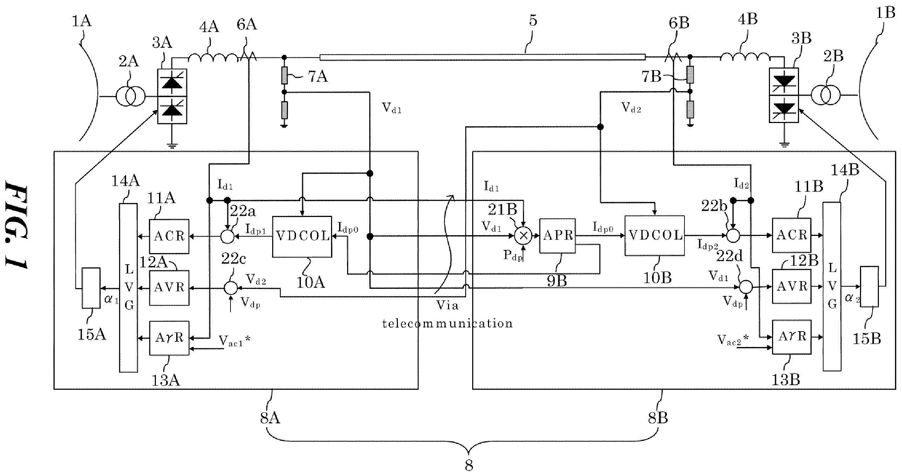

In the following description, a control device of a power converter according to this embodiment will be described with reference to FIGs. 1 to 3. FIG. 1 is a diagram illustrating a circuit structure of a DC power transmission system and that of a control device of a power converter according to this embodiment.

As illustrated in FIG. 1, a DC power transmission system is connected to two AC systems 1A and 1B having different frequencies, and includes two power converters (hereinafter, also referred to as, simply, "converters") 3A and 3B that perform power conversion from AC to DC and from DC to AC.

The converters 3A, 3B are separate-excitation converters including a semiconductor device such as a thyristor, and turn ON or OFF the thyristor in accordance with a control signal given from a control device 8 to be described later and convert AC power to DC power, or DC power to AC power.

The converter 3A and the converter 3B are connected to the AC system 1A and the AC system 1B, respectively, via transformers 2A and 2B. In addition, the converters 3A and 3B are connected to each other through a DC line 5 via DC reactors 4A and 4B. The DC line 5 includes a DC power transmission line and a DC cable.

One of the converters 3A and 3B is operated as a rectifier, and converts AC power into DC power, while the other is operated as an inverter, and converts the DC power transmitted by the DC line 5 into AC power, thereby supplying power between the AC systems 1A and 1B. In this embodiment, the converter 3A is operated as a rectifier, while the converter 3B is operated as an inverter, and the converter 3A is at the power transmitting side (REC side), while the converter 3B is at the power receiving side (INV side) . Note that by the control of the converters 3A and 3B, the converter 3A may operate as an inverter and the converter 3B may operate as a rectifier. In other words, the structure of the control system of the converters 3A and 3B is symmetrical.

The control device 8 is connected to the converters 3A and 3B. The control device 8 controls the operations of the converters 3A and 3B. That is, the control device 8 includes controllers 8A and 8B for inputting control angles to the converters 3A and 3B, respectively. The controller 8A includes a control circuit for controlling the converter 3A (rectifier) . The controller 8B includes a control circuit for controlling the converter 3B (inverter).

DC current detectors 6A and 6B, and DC voltage detectors 7A and 7B are respectively connected at the converters 3A and 3B side of the DC line 5, and DC current detected values (hereinafter, also referred to as simply "DC current") Id1 and Id2 thereof and DC voltage detected values (hereinafter, also referred to as simply "DC voltages") Vd1 and Vd2 are input to the controllers 8A and 8B, and adopted for controlling the converters 3A and 3B.

The controller 8A includes a VDCOL control circuit 10A, subtractors 22a and 22c, a constant current control circuit (ACR) 11A, a constant voltage control circuit (AVR) 12A, a constant margin angle control circuit (AγR) 13A, a minimum value selection circuit (LVG) 14A, and a pulse generation circuit 15A.

The controller 8B includes a calculator 21B, a constant power control circuit 9B, a VDCOL control circuit 10B, subtractors 22b and 22d, a constant current control circuit (ACR) 11B, a constant voltage control circuit (AVR) 12B, a constant margin angle control circuit AγR) 13B, a minimum value selection circuit (LVG) 14B, and a pulse generation circuit 15B.

As described above, the controllers 8A and 8B basically have the same structure, but in this embodiment, the converter 3B is subjected to a master control, and the constant power control circuit at the converter-3A side is omitted. Since the controllers 8A and 8B employ the same structure, in this embodiment, the controller 8B will be described as a representative, and the description for the controller 8A will be omitted as appropriate.

The calculator 21B calculates a difference between a multiplied value Id1·Vd1 of a DC current Id1 and a DC voltage Vd1, and a DC power set value Pdp, with the DC current Id1, the DC voltage Vd1 and the DC power set value Pdp at the power transmitting side being input values. The constant power control circuit 9B outputs, a DC current instruction value Idp0 to the VDCOL control circuits 10A and 10B so as to follow the DC power set value Pdp, with the output value by the calculator 21B being an input. That is, the constant power control circuit 9B outputs the DC current instruction value Idp0 so that the difference between the multiplied value Id1·Vd1 and the DC power set value Pdp is zero.

The VDCOL control circuits 10A and 10B are limiters for the DC current instruction value corresponding to the DC voltage value, and give the limitation corresponding to the DC voltage values Vd1 and Vd2 to the input DC current instruction value Idp0. The output values by the VDCOL control circuits 10A and 10B are set as DC current set values Idp1 and Idp2. The VDCOL characteristics will be described later in detail.

The subtractor 22b calculates, with the DC current set value Idp2 from the VDCOL control circuit 10B and the direct current Id2 being inputs, a difference therebetween, and outputs the calculated difference value to the constant current control circuit 11B. The constant current control circuit 11B calculates a control angle for performing a phase control on the converter 3B to make the DC current Id2 constant, with the output value by the subtractor 22b being an input, and outputs to the minimum value selection circuit 14B. That is, the constant current control circuit 11B calculates the control angle for the converter 3B to make zero the difference value between the DC current set value Idp2 and the DC current Id2, and outputs a signal indicating this control angle to the minimum value selection circuit 14B.

The subtractor 22d calculates, with the DC voltage Vd1 and the DC voltage set value Vdp at the power transmitting side being inputs, a difference therebetween, and outputs the calculated difference value to the constant voltage control circuit 12B. The constant voltage control circuit 12B calculates a control angle for performing the phase control on the converter 3B to make the DC voltage Vd2 at the power receiving side constant, with the output value by the subtractor 22d being an input, and outputs the signal indicating the control angle to the minimum value selection circuit 14B. That is, the constant voltage control circuit 12B calculates the control angle for the converter 3B to make zero the difference value between the DC voltage Vd1 and the DC voltage set value Vdp, and outputs the signal indicating this control angle to the minimum value selection circuit 14B.

The constant margin angle control circuit 13B calculates a control angle for maintaining the margin angle constant to prevent the converter 3B from causing a commutation failure, with the DC current Id2 and the AC voltage Vac2* being inputs, and outputs the signal indicating this control angle to the minimum value selection circuit 15B.

The minimum value selection circuit 14B selects the minimum control angle among the control angles input from the constant current control circuit 11B, the constant power control circuit 12B, and the constant margin angle control circuit 13B, and outputs this control angle as a control angle $\alpha 2$ for the converter 3B to the pulse generation circuit 15B.

The pulse generation circuit 15B generates a control signal that is a pulse signal to be given to the converter 3B based on the control angle $\alpha 2$, and outputs to the converter 3B.

[1-2. Detailed Structure]

The VDCOL control circuits 10A and 10B will be described in more detail. The VDCOL control circuits 10A and 10B are circuits having characteristics (hereinafter, also referred to as "VDCOL characteristics") for limiting the upper limit value or the lower limit value of the DC current instruction value according to the DC voltage. In this case, the VDCOL characteristics are a table in which the upper limit of the DC current instruction value is a function of the DC voltage or the DC voltage associated with the upper limit of the DC current instruction value, and the lower the DC voltage is, the more the upper limit value of the DC current command value is lowered. The VDCOL characteristics are set at the power transmitting side and the power receiving side, respectively.

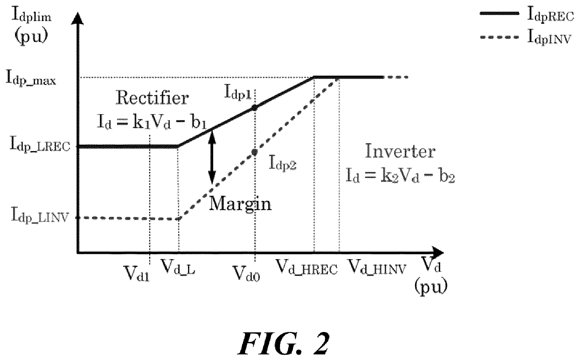

FIG. 2 is a diagram illustrating the VDCOL characteristics in the VDCOL control circuit according to this embodiment. As illustrated in FIG. 2, in the VDCOL characteristics, the upper limit of the DC current instruction value is a function of the DC voltage, and has two break points of high and low as break points. That is, the upper limit value of the DC current instruction value is constant in the regions where the DC voltage is equal to or higher than the high break point and is equal to or smaller than the low break point, and the upper limit value within the region equal to or higher than the high break point is set to be higher than that within the region equal to or smaller than the low break point. Within the region from the high break point to the low break point, the upper limit value of the DC current instruction value decreases in a linear function. In other words, the high break point is a start point for decreasing the limit value of the DC current instruction value from the maximum value, and the low break point is an end point after the limit value of the DC current instruction value has been decreased to the minimum value.

As illustrated in FIG. 2, the VDCOL characteristics are set to have different characteristics at the power transmitting side and the power receiving side. That is, the low break point is consistent at Vd_L with the characteristics at the power transmitting side and the power receiving side, and the minimum value Idp_LINV of the limit value at the power receiving side of the DC current instruction value within the region equal to or smaller than the low break point V_L is set to be smaller than the minimum value Idp_LREC of the limit value at the power transmitting side. In addition, the limit value of the DC current instruction value corresponding to the high break point is the same maximum value Idp_max, but the high break point Vd_HREC at the power transmitting side is set to be smaller than the high break point Vd_HINV at the power receiving side. Hence, the limit value Idp1 from the high break point Vd_HREC to the low break point Vd_L at the power transmitting side is set to be always higher than the limit value Idp2 from the high break point Vd_HINV to the low break point Vd_L at the power receiving side, and a margin between the limit value at the power transmitting side and the limit value at the power receiving side is ensured. The smaller the DC voltage is, the greater the margin ensured becomes.

[1-3. Action]

An example action of the VDCOL control circuit in the control device of the power converter according to this embodiment will be described with reference to FIG.

2.

(First Example)

When an AC fault occurs and the DC voltage decreases to Vd0 that is between the high break point and the low break point as illustrated in FIG. 2, the DC current instruction value at the power transmitting side (REC side) is limited to Idp1, and the DC current instruction value at the power receiving side (INV side) is limited to Idp2. At this time, the difference Idp1-Idp2 is caused in the DC current instruction value between the power transmitting side and the power receiving side. Due to the DC current of this difference, the DC line (power transmission cable) can be quickly charged, and the transmission power can be recovered quickly.

(Second Example)

When an AC fault occurs and the DC voltage decreases to Vd1 that is smaller than the low break point as illustrated in FIG. 2, the DC current instruction value at the power transmitting side (REC side) is limited to Idp_LREC, and the DC current instruction value at the power receiving side (INV side) is limited to Idp_INV. At this time, a difference (Idp_LREC)-(Idp_INV) is caused in the DC current instruction value between the power transmitting side and the power receiving side. Due to the DC current of this difference, the DC line (power transmission cable) can be quickly charged. Even during the DC voltage is increasing, there is a margin that is the difference of the DC current instruction value until the DC voltage at the power transmitting side and the power receiving side reaches the upper limit that is Vd_HREC, Vd_HINV, respectively, and the DC line (power transmission cable) can be charged quickly, quickly recovering the transmission power.

[1-4. Effects]

(1) The control device 8 of the power converter according to this embodiment is the control device 8 of the power converters 3A and 3B that perform power conversion between the two AC systems 1A and 1B connected together via the DC line 5, the power converter 3A operating as the rectifier, and the power converter 3B operating as the inverter, and includes the constant power control circuit 9B that outputs a control angle so as to cause the DC power to follow the DC power set value, the VDCOL control circuits 10A and 10B that have the VDCOL characteristics limiting the DC current instruction value based on the DC voltage, the constant current control circuits 11A and 11B that output a control angle so as to cause the DC current at the DC line 5 to follow the DC current set value set based on the VDCOL characteristics, the constant voltage control circuits 12A and 12B that output a control angle so as to cause the DC voltage of the DC line 5 to follow the DC voltage set value, the constant margin angle control circuits 13A and 13B that output a control angle so as to make the margin angles for the power converters 3A and 3B constant, and the minimum value selection circuits 14A, 14B that set, as the control angles for the power converters 3A and 3B, the minimum value of the control angles for the constant current control circuits 11A and 11B, the constant voltage control circuits 12A and 12B, and the constant margin angle control circuits 13A and 13B. The VDCOL control circuits 10A and 10B have different VDCOL characteristics at the rectifier-3A side and the inverter-3B side, respectively, each VDCOL characteristic has two break points of high and low for the DC voltage, the upper limit value of the DC current instruction value within the region between the high and low break points is set to be lower at the inverter-3B side than the rectifier-3A side, and the low break points of the respective VDCOL characteristics are consistent, the upper limit value of the DC current instruction value within the region equal to or smaller than the low break point is set to be lower at the inverter-3B side than the rectifier-3A side.

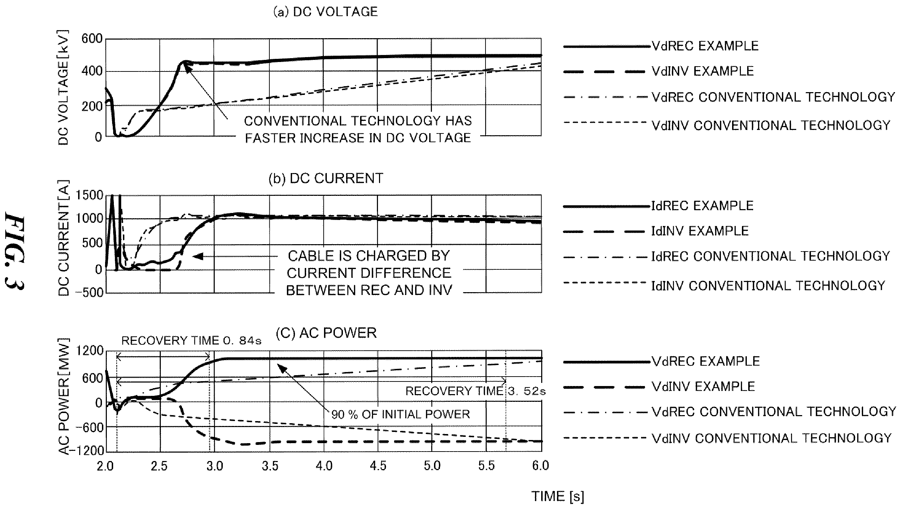

Consequently, at the time of AC fault elimination, the initial operation current value is limited by the VDCOL control circuit, the DC line is charged by the difference in the current set value between the power transmitting side and the power receiving side, and the DC voltage can be recovered quickly. A comparison between the effect by this embodiment and the effect by the conventional technologies is illustrated in FIG. 3.

FIGs. 3(a)-3(c) are diagrams illustrating an example of the DC voltage recovery and the transmission power recovery by the control device of the power converter, FIG. 3(a) is a DC voltage waveform, FIG. 3(b) is a DC current waveform, and FIG. 3(c) is an AC power waveform. As illustrated in FIGs. 3(a)-3(c), according to conventional technologies, the DC current flows fast, but the increase of DC voltage is slow and it takes a time to charge the cable, and it takes a time to recover the transmission power. In general, the recovery time of the transmission power is defined as the time until the AC power at the rectifier side recovers to 90 % of the initial power from the fault elimination. In the case of conventional technologies, as illustrated in FIG. 3(c), the power recovers in 3.52 seconds after the fault is eliminated, but in the case of this embodiment, the increase of the DC voltage is quick and the power transmission cable is charged to recover the transmission power to the initial operation power within one second.

[2. Second Embodiment]

[2-1. Structure]

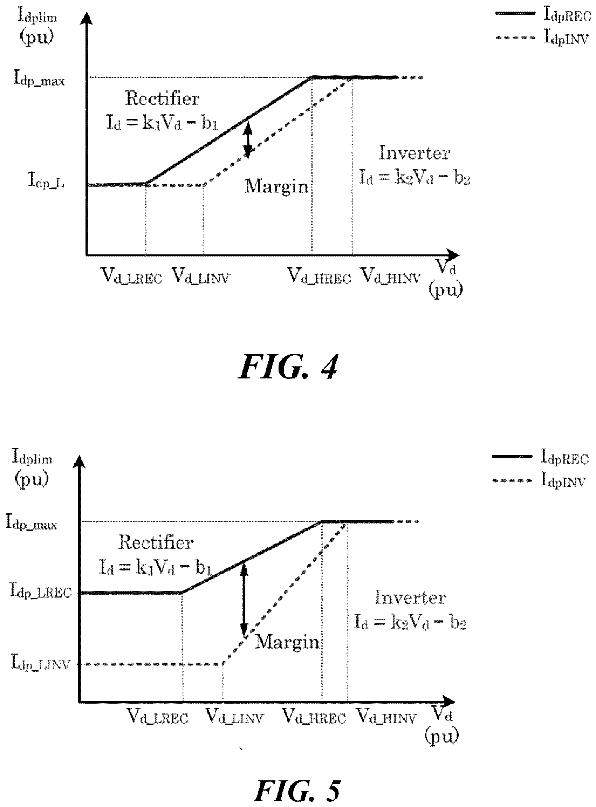

A second embodiment will be described with reference to FIG. 4. The second embodiment employs the same basic structure as that of the first embodiment. Hence, only the differences from the first embodiment will be described, the same component as that of the first embodiment will be denoted by the same reference numeral, and a detailed description thereof will be omitted.

FIG. 4 is a diagram illustrating the VDCOL characteristic in the VDCOL control circuit according to the second embodiment. As illustrated in FIG. 4, in this embodiment, the low break point Vd_LINV at the power receiving side is set to be higher than the low break point Vd_LREC at the power transmitting side, and the minimum value that is a limit for the DC current instruction value is set to be the same value that is Idp_L.

[2-2. Action and Effect]

In this embodiment, each VDCOL characteristic has two break points of high and low for the DC voltage, and the upper limit value of the DC current instruction value between the high and low break points is set to be lower at the inverter-3B side than the rectifier-3A side, and the low break point Vd_LINV at the inverter-3B side is set to be higher than the low break point Vd_LREC at the rectifier-3A side, and the upper limit value of the DC current instruction value at the rectifier-3A side within the region equal to or smaller than the low break point Vd_LREC at the rectifier-3A side is set to be equal to the upper limit value of the DC current instruction value at the inverter-3B side within the region equal to or smaller than the low break point Vd_LINV at the inverter-3B side.

Consequently, when the DC voltage is equal to or higher than the low break point at the rectifier side, the difference of the upper limit value between the rectifier side (power transmitting side) and the inverter side (power receiving side) can be maintained, the DC line can be charged by the difference, and the transmission power can be recovered quickly. In addition, since the upper limit value of the DC current instruction value within the region equal to or smaller than the low break point at the rectifier side is set to be equal to the value at the inverter side, in comparison with the first embodiment, the current instruction value at the rectifier side (power transmitting side) can be made to a low value, and the reactive power consumption at the AC-system side can be suppressed and the recovery of the DC voltage can be accelerated while increasing the stability at the system side.

[3. Third Embodiment]

A third embodiment will be described with reference to FIG. 5. The third embodiment employs the same basic structure as that of the first embodiment.

Hence, only the differences from the first embodiment will be described, the same component as that of the first embodiment will be denoted by the same reference numeral, and a detailed description thereof will be omitted.

FIG. 5 is a diagram illustrating the VDCOL characteristics of the VDCOL control circuit according to the third embodiment. As illustrated in FIG. 5, the VDCOL characteristics according to this embodiment is set to have the higher low break point Vd_LINV at the inverter-3B side than the low break point Vd_LREC at the rectifier-3A side. The VDCOL characteristics according to this embodiment differ from those of the second embodiment, and the upper limit value of the DC current instruction value within the region equal to or smaller than the low break point Vd_LREC at the rectifier-3A side is set to be higher than the upper limit value of the DC current instruction value within the region equal to or smaller than the low break point Vd_LINV at the inverter-3B side.

Since the low break point Vd_LINV at the inverter-3B side is set to be higher than the low break point Vd_LREC at the rectifier-3A side, the difference in the limit value between the rectifier-3A side (power transmitting side) and the inverter-3B side (power receiving side) is maintained, the DC line can be charged by that difference, and the transmission power can be recovered quickly. In addition, since the low break point is set to be higher at the inverter-3B side than the rectifier-3A side, the difference between the power transmitted at the rectifier-3A side and the power absorbed at the inverter-3B side can be maximized. Hence, the increase of the DC power is accelerated to recovering the transmission power. In particular, the smaller the DC voltage in the region from the high break point Vd_HINV to the low break point Vd_LINV at the power receiving side is, the greater the margin increases, and the instantaneous effect is improved.

[4. Modified Examples of First to Third Embodiments]

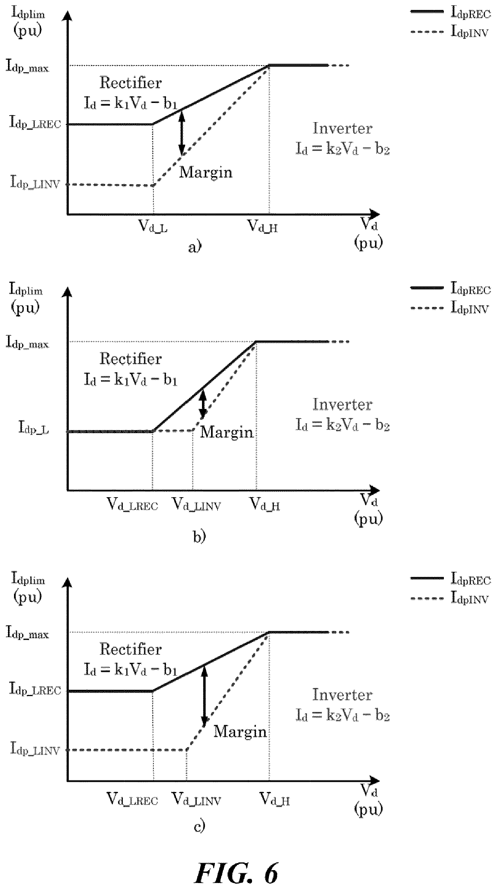

Modified examples of the first to the third embodiments will be described with reference to FIGs. 6(a) to 6(c). The description for the same component will be omitted, and only the differences will be described. FIG. 6(a) illustrates a modified example of the VDCOL characteristics according to the first embodiment. FIG. 6(b) illustrates a modified example of the VDCOL characteristics according to the second embodiment. FIG. 6(c) illustrates a modified example of the VDCOL characteristics according to the third embodiment.

In any modified examples, the high break point is consistent at the power transmitting side and the power receiving side. Even in such cases, the similar effects to those of the first to third embodiments can be obtained.

[5. Fourth Embodiment]

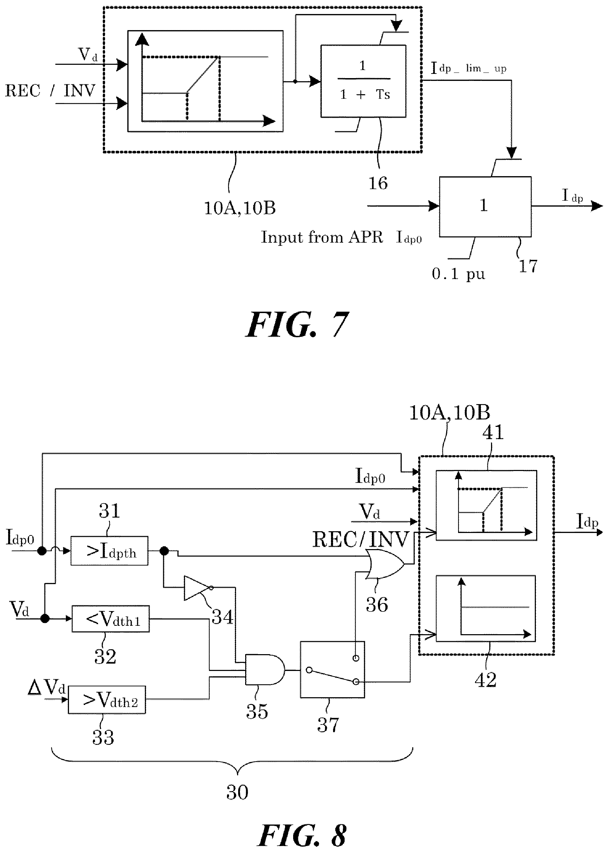

A fourth embodiment will be described with reference to FIG. 7. The fourth embodiment is applicable to any of the first to third embodiments and the modified examples thereof. The difference is that the VDCOL control circuits 10A and 10B are provided with primary delay circuits 16 at the rectifier-3A side and the inverter-3B side, respectively.

The primary delay circuit 16 is a circuit that delays the return of the DC current instruction value with a limitation due to the decrease in DC voltage to the initial operation current value. The initial operation current value is a DC current instruction value during the normal operation before a fault occurs. The primary delay circuit 16 acts when the DC voltage returns after the fault elimination, and a time constant $T_S$ of the primary delay circuit 16 at the time of the fault recovery is set in a way that a time constant Tc_UpINV at the inverter-3B side is higher than a time constant Tc_UpREC at the rectifier-3A side.

A filter circuit 17 is provided at the latter stage of the primary delay circuit 16. The filter circuit 17 has a lower limit value (e.g., 0.1 pu) set, has the upper limit value that is the upper limit value of the DC current instruction value output by the VDCOL control circuits 10A and 10B set, and directly outputs Idp when the input Idp0 from the constant power control circuit 9B is equal to or greater than the lower limit value and equal to or smaller than the upper limit value. When the input Idp0 is smaller than the lower limit value, 0.1 pu is output, and when the input Idp0 exceeds the upper limit value, the value is limited to the upper limit value, and output.

As described above, respectively provided in the VDCOL control circuits 10A and 10B are the primary delay circuits 16 at the rectifier-3A side and the inverter-3B side, and the time constant of the primary delay circuit 16 at the time of fault recovery is set to be higher at the inverter-3B side than the rectifier-3A side. As a result, when the DC voltage is recovered by eliminating the fault, the DC current instruction value can be returned to the initial operation current value faster at the rectifier-3A side than the inverter-3B side. Hence, since the difference between the power flowing in from the rectifier-3A side and the power flowing out to the inverter-3B side increases, the DC voltage can be recovered quickly by charging the DC line 5 (power transmission cable) by such difference. In addition, by the primary delay circuit 16, the DC current instruction value at the time of recovery can be increased smoothly without being increased step by step, and a commutation failure during the recovery can be prevented. Furthermore, from the reasons such as the design of the DC current system and the AC system, even if high and low break points of the VDCOL characteristics at the rectifier-3A side and the inverter-3B side are defined, and the margin is defined by the VDCOL characteristics, by providing the primary delay circuit 16, the high break point of the inverter 3B can be substantially increased, and a margin predetermined for the DC current instruction value can be obtained.

[6. Fifth Embodiment]

[6-1. Structure]

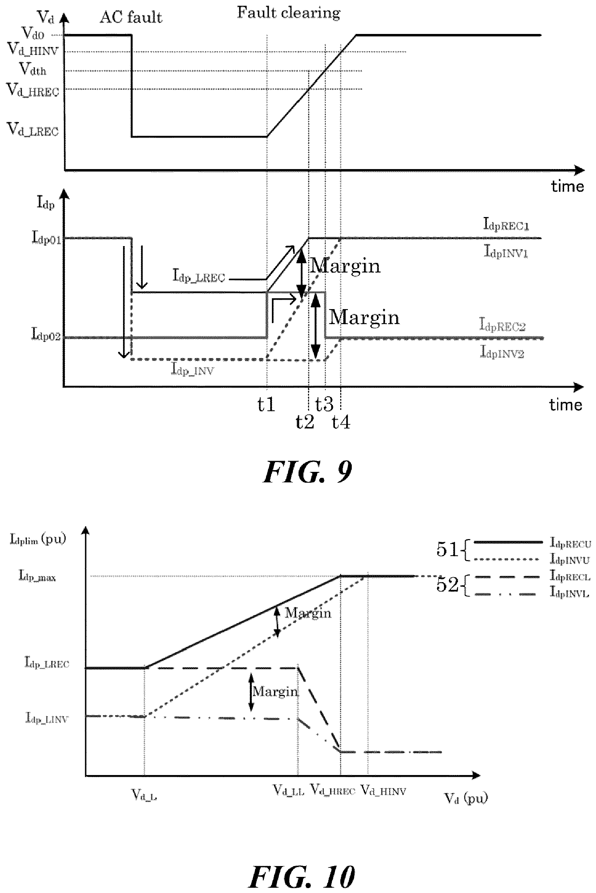

A fifth embodiment will be described with reference to FIGs. 8 and 9. The fifth embodiment employs the same basic structure as that of the first embodiment. Hence, only the differences from the first embodiment will be described, the same component as that of the first embodiment will be denoted by the same reference numeral, and the detailed description thereof will be omitted. However, as for the VDCOL characteristics, those of the first to third embodiments and the modified examples thereof are applicable.

According to this embodiment, the recovery time can be reduced even if the initial operation power (DC current) is small. The structure for this action is illustrated in FIG. 8. FIG. 8 is a diagram illustrating a control circuit that is a part of the control device of the power converter according to the fifth embodiment.

As illustrated in FIG. 8, the VDCOL control circuits 10 A and 10 B have VDCOL characteristics 41 described in the first to third embodiments and the modified examples thereof, and fixed limiter characteristics 42. The fixed limiter characteristics 42 are characteristics having the limit value of the DC current instruction value relative to the DC voltage fixed to a constant level value, and are set at the rectifier-3A side and the inverter-3B side, respectively. The constant value is set to be higher at the rectifier-3A side than the inverter-3B side. That is, the fixed limiter characteristics 42 are for forcibly or temporarily increasing the DC current instruction value when the initial operation current value is small, and the DC voltage is also small when a fault occurs.

A determination circuit 30 is provided between the constant power control circuit 9B and the VDCOL control circuits 10A and 10B. The determination circuit 30 determines whether the DC current and the DC voltage at the time of initial operation is smaller than a predetermined threshold or not, changes the characteristics to the fixed limiter characteristics 42 when the initial operation current instruction value is equal to or smaller than a threshold Idpth and the DC voltage has not been recovered to a threshold Vdth1, , and changes to the VDCOL characteristics 41 when the DC voltage recovers to a value equal to or greater than the threshold Vdth1.

More specifically, the determination circuit 30 includes a current determiner circuit 31, a voltage determiner circuit 32, a voltage change determiner circuit 33, a non-logic circuit 34, a logic AND circuit 35, a logic OR circuit 36, and a switch 37.

The current determiner circuit 31 is a circuit to determine by which one of the VDCOL characteristics 41 and the fixed limiter characteristics 42 the DC current instruction value is limited from the initial operation current value. More specifically, the current determiner circuit 31 is connected to the non-logic circuit 34 and the logic AND circuit 35, and determines whether the DC current instruction value Idp0 input from the constant power control circuit 9B exceeds a preset threshold Idpth or not. When Idp0 > Idpth, a value 1 is output. When Idp0 ≤ Idpth, a value 0 is output.

The voltage determiner circuit 32 is a circuit to determine whether the DC voltage is at a predetermined voltage value or not, and determine the recovery level of the DC voltage. More specifically, the voltage determiner circuit 32 is connected to the logic AND circuit 35, and determines whether the input DC voltage Vd is smaller than a preset threshold Vdth1 or not. A value 1 is output when Vd < Vdth1. A value 0 is output when Vd ≥ Vdth1.

The voltage change determiner circuit 33 is a circuit to determine whether it is recovered from the fault or not based on the deviation of the DC voltage. More specifically, the voltage change determiner circuit 33 is connected to the logic AND circuit 35, and determines whether a deviation ∆Vd (= Vd(t+1) - Vd(t)) of the DC voltage input from an unillustrated subtractor exceeds a preset threshold Vdth2 or not. A value 1 is output when ∆Vd > Vdth2. A value 0 is output when ∆Vd ≤ Vdth2.

The non-logic circuit 34, the logic AND circuit 35, and the logic OR circuit 36 are well-known circuits. The non-logic circuit 34 is connected to the logic AND circuit 35, and outputs an inverted input. When 1 is input, 0 is output, and when 0 is input, 1 is output. The logic AND circuit 35 is connected to the switch 37, outputs 1 when all inputs are 1, and outputs 0 when any of the inputs is 0. The logic OR circuit 36 is connected to the VDCOL characteristics 41, outputs 1 when any one of the inputs is 1, and outputs 0 when all inputs are 0.

The switch 37 changes the characteristics between the VDCOL characteristics 41 and the fixed limiter characteristics 42 based on the output results by the determiner circuits 31 to 33. When a value 1 is input from the logic AND circuit 35, the characteristics are changed to the fixed limiter characteristics 42, and when a value 0 is input from the logic AND circuit 35, the characteristics are changed to the VDCOL characteristics 41.

[6-2. Action]

Typical example operations of the determiner circuit 30 and the VDCOL control circuits 10A and 10B in this embodiment will be described with reference to FIG. 9. The description will be separately given to a case in which the initial operation current instruction values Idp01 and Idp02 are high, and a case in which those are small. That is, it is assumed that the initial operation current instruction value Idp02 < Idpth < Idp01. In addition, the VDCOL characteristics 41 are exemplified by the characteristics of the third embodiment (FIG. 5). FIG. 9 is a graph indicating the time change in the DC voltage and in the DC current instruction value.

(1) When initial operation current instruction value Idp0 is high (Idp01 > Idpth > Idp_LREC)

When the DC voltage decreases to Vd_LREC due to the AC fault, the DC current instruction value at the power transmitting side and the power receiving side is limited from Idp01 to Idp_LREC and Id_LINV by the VDCOL characteristics 41. Subsequently, the fault is eliminated at a time t1, the DC voltage starts returning, and the DC current instruction value increases according to the respective VDCOL characteristics 41. When the DC voltage increases up to Vd_HREC (a time t2), the DC current instruction value at the power transmitting side is returned to the initial value Idp01, and when the DC voltage is increased to Vd_HINV (a time t4), the DC current instruction value is returned to the initial value Idp01 at the power receiving side.

(2) When initial operation instruction value is small (Idp_LINV < Idp02 < Idpth)

When the DC voltage decreases to Vd_LREC due to the AC fault, the DC current instruction value at the power receiving side is limited from Idp02 to Idp_INV. Since Idp02 is smaller than the threshold Idpth, no limitation is given to the DC current instruction value at the power transmitting side, and the instruction value remains unchanged from the initial value Idp02. Subsequently, when the fault is eliminated at a time t1 and ∆Vd > Vdth2 is satisfied due to the increase of the DC voltage, the switch 37 changes the characteristics to the fixed limiter characteristics 42. Assuming that, for example, the power transmitting side is Idp_LREC and the power receiving side is Idp_LINV as for respective levels, the DC line 5 (power transmission cable) is quickly charged by temporarily increasing the difference in the DC current between the power transmitting side and the power receiving side. In addition, when the DC voltage is recovered to the threshold Vdth1 (a time t3), the switch 37 changes the characteristics to the VDCOL characteristics 41, and the DC current instruction value is returned to the initial operation point Idp02 (a time t4).

[6-3. Effects]

The VDCOL control circuits 10A and 10B of this embodiment have the VDCOL characteristics 41 as the first characteristic and, as the second characteristic, the fixed limiter characteristics 42 having the constant limit value for the DC current instruction value relative to the DC voltage set to be a higher level at the rectifier-3A side than the inverter-3B side. In addition, the control device 8 of this embodiment further includes a current level determiner 31 that determines whether the DC current instruction value exceeds a preset threshold Idpth or not, a voltage level determiner 32 that determines whether the DC voltage is smaller than the preset threshold Vdth or not, and the switch 37 that changes the characteristics between the VDCOL characteristics 41 and the fixed limiter characteristics 42 based on the determination results by the current level determiner 31 and the voltage level determiner 32. When the current level determiner 31 determines that the DC current instruction value is equal to or smaller than the threshold Idpth, and the voltage level determiner 32 determines that the DC voltage is smaller than the threshold Vdth, the switch 37 changes the characteristics to the fixed limiter characteristic 42.

Consequently, since the fixed limiter characteristics 42 are set in a way that the constant level at the power transmitting side is higher than the constant level at the power receiving side, even if the initial operation current is small, the characteristics are forcibly changed to the fixed limiter characteristics 42 to temporarily maintain the difference between the power transmitting side and the power receiving side, accelerating the recovery of the transmission power.

[7. Sixth Embodiment]

[7-1. Structure]

A sixth embodiment will be described with reference to FIGs. 10 to 12. The sixth embodiment employs the same basic structure as that of the first embodiment. Hence, only the differences from the first embodiment will be described, the same component as that of the first embodiment will be denoted by the same reference numeral, and the detailed description thereof will be omitted.

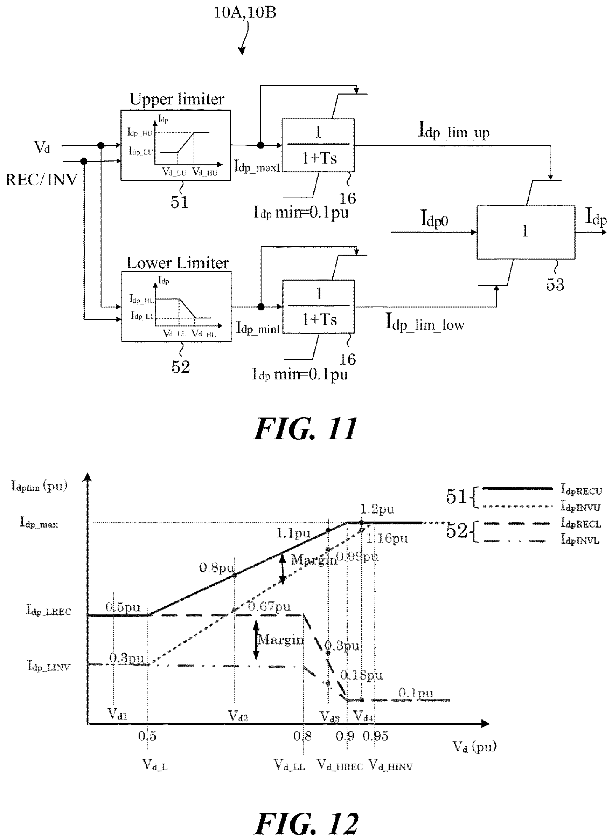

FIG. 10 is a diagram illustrating VDCOL characteristics in the VDCOL control circuit according to the sixth embodiment. FIG. 11 is a diagram illustrating a VDCOL control circuit according to the sixth embodiment. This embodiment is to maintain the DC current margin at the power transmitting side and the power receiving side at the time of fault recovery even if the initial operation point is low.

The VDCOL control circuits 10A and 10B according to this embodiment each include an upper limiter 51 for defining the upper limit value of the DC current instruction value, a lower limiter 52 for defining the lower limit value of the DC current instruction value, primary delay circuits 16 provided at the latter stages of the limiters 51 and 52 respectively, and a filter circuit 53 receiving an input from each of the primary delay circuit 16.

The upper limiter 51 is one of the VDCOL characteristics indicated in any of the first to third embodiments and the modified examples thereof (FIGs. 2, 4 to 6), and in this embodiment, as illustrated in FIG. 10, is the VDCOL characteristics of the first embodiment. The upper limiter 51 is a limiter that gives an upper limit to a value that the DC current instruction value can take.

The lower limiter 52 is a limiter that gives the lower limit value to the DC current instruction value according to the DC voltage, and gives the lower limit to the value that the DC current instruction value can take.

That is, the lower limiter 52 is a table in which the lower limit of the DC current instruction value is a function of the DC voltage or the DC voltage associated with the lower limit of the DC current instruction value, and as the DC voltage decreases, the lower limit value of the DC current instruction value increases. The lower limiter 52 is provided at the power transmitting side and the power receiving side, respectively.

Like the upper limiter 51, the lower limiter 52 has two break points of high and low. In this embodiment, as illustrated in FIG. 10, the high breakpoints at the power transmitting side and the power receiving side, and the low break points thereof are consistent with each other at Vd_HREC and Vd_LL, respectively, but at least either the high break points and the low break points may be set to be different from each other. In this case, both the high break point and the low break point are set to be higher at the power receiving side than the power transmitting side.

As for the lower limiter 52, the lower limit value of the DC current instruction value is constant in the region equal to or higher than the high break point Vd_HREC and the region equal to or smaller than the low break point Vd_LL, and is set to be higher in the region equal to or smaller than the low break point Vd LL than the region equal to or higher than the high break point Vd_HREC. Within the region from the high break point Vd_HREC to the low break point Vd_LL, the lower limit of the DC current instruction value increases linearly. In addition, as illustrated in FIG. 10, the lower limiter 52 at the power transmitting side and the power receiving side has the same constant value in the region equal to or higher than the high break point Vd_HREC, but within the region from the high break point Vd_HREC to the low break point Vd_LL, and within the region equal to or smaller the low break point Vd_LL, the lower limiter 52 at the power transmitting side is set to be higher than the lower limiter 52 at the power receiving side.

The primary delay circuit 16 is a circuit that delays the return of the DC current instruction value limited due to the decrease in the DC voltage to the initial operation current value. The time constant of the primary delay circuit 16 at the time of a fault recovery is set to be higher at the inverter-3B side than the rectifier-3A side. The primary delay circuit 16 at the upper-limiter-51 side outputs an upper limit value Idp_lim_up of the DC current instruction value to the filter circuit 53, and the primary delay circuit 16 at the lower-limiter-52 side outputs a lower limit value Idp_lim_low of the DC current instruction value to the filter circuit 53.

The filter circuit 53 is connected to the constant power control circuit 9B, directly outputs Idp0 (Idp = Idp0) when the DC current instruction value Idp0 input from the circuit 9B is equal to or higher than the lower limit value Idp_lim_low and equal to or smaller than the upper limit value Idp_lim_up, outputs Idp = Idp_lim_low when smaller than Idp_lim_low, and outputs Idp = Idp_lim_up when exceeding the upper limit value Idp_lim_up. Note that the filter circuit 53 may be provided not in the VDCOL control circuits 10A and 10B but outside thereof.

[7-2. Action]

With reference to FIG. 12, first, specific examples of the upper limiter 51 and lower limiter 52 will be described. FIG. 12 indicates, as an example, the value of each break point in a graph. As for the value of each break point, the following values will be described as examples.

Idp_LINV = 0.3 pu, Idp_LREC = 0.5 pu,
Vd_L = 0.5 pu, Vd_LL = 0.8 pu,
Vd_HREC = 0.9 pu, Vd_HINV = 0.95 pu

Assuming an AC fault at the nearest end to the power transmitting side, when this AC fault occurs, the DC voltage Vd decreases to substantially 0 pu. After the fault is eliminated, with the range of the DC voltage Vd divided into (1) $0 \le Vd \le Vd\_L$, (2) $Vd\_L \le Vd \le Vd\_LL$, (3) $Vd\_LL \le Vd \le Vd\_HREC$, and (4) $Vd\_HREC \le Vd \le 1$, the upper limiter 51 and the lower limiter 52 at the power transmitting side and the power receiving side will be described.

### (1) $0 \le Vd \le Vd\_L$

The value that the DC current instruction value at the power transmitting side can take:
(Idp_lim_low, Idp_lim_up) = (0.5 pu constant, 0.5 pu constant).
The value that the DC current instruction value at the power receiving side can take:
(Idp_lim_low, Idp_lim_up) = (0.3 pu constant, 0.3 pu constant).

### (2) $Vd\_L \le Vd \le Vd\_LL$

As for the lower limiter 52, although the lower limit value is constant when the DC voltage increases, but as for the upper limiter 51, the upper limit value increases along with the increase in the DC voltage. When, for example, the DC voltage increases up to an intermediate value Vd2 (0.65 pu) between Vd_L and Vd_LL, the value that the DC current instruction value can take up to Vd2 is as follow.
The value that the DC current instruction value at the power transmitting side can take:
(Idp_lim_low, Idp_lim_up) = (0.5 pu constant, 0.5 pu to 0.8 pu).
The value that the DC current instruction value at the power receiving side can take:
(Idp_lim_low, Idp_lim_up) = (0.3 pu constant, 0.3 pu to 0.67 pu)

### (3) $Vd\_LL \le Vd \le Vd\_HREC$

When the DC voltage increases, the upper limit value increases along with the upper limiter 51, but the lower limit value decreases along with the lower limiter 52. When, for example, the DC voltage increases to an intermediate value Vd3 (0.85 pu) between Vd_LL and Vd_HREC, the value that the DC current instruction value can take at Vd3 is as follow.
The value that the DC current instruction value at the power transmitting side can take:
(Idp_lim_low, Idp_lim_up) = (0.3 pu, 1.1 pu).
The value that the DC current instruction value at the power receiving side can take:
(Idp_lim_low, Idp_lim_up) = (0.18 pu, 0.99 pu).

### (4) $Vd\_HREC \le Vd \le 1$

The DC voltage returns to substantially rated value, and the upper limiter 51 becomes the maximum value, while the lower limiter 52 becomes the minimum value. When, for example, the DC voltage increases to an intermediate value Vd4 (0.925 pu) between V_HREC and 1, the value that the DC current instruction value at Vd4 can take is as follow.
The value that the DC current instruction value at the power transmitting side can take:
(Idp_lim_low, Idp_lim_up) = (0.1 pu, 1.2 pu).
The value that the DC current instruction value at the power receiving side can take:
(Idp_lim_low, Idp_lim_up) = (0.1 pu, 1.16 pu).
Next, the operations of the VDCOL control circuits 10A and 10B will be described when the converter 3B is operated as an inverter in a case in which the initial operation point is high and in a case in which the initial operation point is low. As an example, the initial current instruction value Idp0 when the initial operation point is high is 1.0 pu, and the initial current instruction value Idp0 when low is 0.1 pu.

(1) When initial operation point is high

When Vd = Vd1: DC current instruction value Idp(REC) at the power transmitting side = 0.5 pu, and DC current instruction value Idp (INV) at the power receiving side = 0.3 pu.
When Vd = Vd2: DC current instruction value Idp(REC) at the power transmitting side = 0.8 pu, and DC current instruction value Idp (INV) at the power receiving side = 0.67 pu.
When Vd = Vd3: DC current instruction value Idp(REC) at the power transmitting side = 1.0 pu, and DC current instruction value Idp (INV) at the power receiving side = 0.99 pu.
When Vd = Vd2: DC current instruction value Idp(REC) at the power transmitting side = 0.5 pu, and DC current instruction value Idp (INV) at the power receiving side = 0.3 pu.

(2) When initial operation point is low

When Vd = Vd1: DC current instruction value Idp(REC) at the power transmitting side = 0.5 pu, and DC current instruction value Idp (INV) at the power receiving side = 0.3 pu.

When Vd = Vd2: DC current instruction value Idp(REC) at the power transmitting side = 0.5 pu, and DC current instruction value Idp (INV) at the power receiving side = 0.3 pu.

When Vd = Vd3: DC current instruction value Idp(REC) at the power transmitting side = 0.3 pu, and DC current instruction value Idp (INV) at the power receiving side = 0.18 pu.

When Vd = Vd2: DC current instruction value Idp(REC) at the power transmitting side = 0.1 pu, and DC current instruction value Idp (INV) at the power receiving side = 0.1 pu.

As explained above, whether either of the upper limiter 51 or the lower limiter 52, or both affect the limitation for the DC current instruction value is determined according to the initial current instruction value. That is, when the initial current instruction value is high, since it does not fall below the lower limit value of the lower limiter 52, there is no limitation by the lower limiter 52. Conversely, when the initial current instruction value is high and exceeds the upper limit value of the upper limiter 51, the DC current instruction value is lowered according to the upper limiter 51.

Still further, when the initial current instruction value is low, since it does not exceed the upper limit value of the upper limiter 51, there is no limitation by the upper limiter 51. Conversely, when the initial current instruction value is low and falls below the lower limit value of the lower limiter 52, the DC current instruction value is forcibly increased according to the lower limiter 52.

[7-3. Effects]

The VDCOL control circuits 10A and 10B according to this embodiment have the upper limiter 51 for defining the upper limit value of the DC current instruction value, and the lower limiter 52 for defining the lower limit value of the DC current instruction value, and the lower limiter 52 has different characteristics at the rectifier-3A side and the inverter-3B side, and the two break points of high and low, Vd_LL and Vd_HREC respectively, and within the region equal to or smaller than the high break point Vd_HREC, the lower limit value of the DC current instruction value is set to be higher at the rectifier-3A side than the inverter-3B side.

Thus, without a circuit that determines whether or the initial operation point is low or not, even when the initial operation point is high (e.g., the initial current is 1.0 pu), and the initial operation point is low (e.g., the initial current is 0.1 pu), the margin for the current instruction value at the power transmitting side and the power receiving side can be ensured.

As described above, according to this embodiment, even if the determination circuit 30 is not provided unlike the fifth embodiment, the initial operation point is determined and when the operation point is low, the DC current instruction value is forcibly and temporarily increased.

[8. Other Embodiments]

Several embodiments of the present disclosure have been described in this specification, but those embodiments are merely presented as examples, and are not intended to limit the scope of the present disclosure. The above embodiments can be carried out in other various forms, and various omissions, replacements, and modifications can be made thereto without departing from the scope of the present disclosure. Such embodiments and modified forms thereof are within the scope of the present disclosure, and also within the scope of the invention as recited in appended claims, and further within the equivalent range thereto.

For example, according to the first to sixth embodiments, the VDCOL characteristics are in a linear function between two break points high and low, but may be a higher order function like a quadratic function to ensure a margin. For example, the limiter at the power transmitting side may be a quadratic function projecting upwardly, and the limiter at the power receiving side may be a quadratic function projecting downwardly to ensure the margin.

In the above embodiments, as for a large-small determination relative to a threshold, a determination on consistency or inconsistency, etc., it is optional to include a value for the criteria equal to or higher than and equal to or smaller than, and to exclude a value for the criteria greater than, smaller than, exceeding, not exceeding, higher than, lower than, and less than, as long as the determination is made. Hence, the results are substantially same when the criteria "equal to or higher than" is interpreted as "greater than", "exceeding", and "higher than", and "equal to or smaller than" is interpreted as "smaller than", "not exceeding", "lower than", and "less than".

REFERENCE SIGNS LIST

| 1A, 1B | AC | system |
|---|---|---|
| 2A, 2B | | Transformer |
| 3A, 3B | | Power converter |
| 4A, 4B | | DC Reactor |
| 5 | DC | line |
| 6A, 6B | | DC current detector |
| 7A, 7B | | DC voltage detector |

| | |
|---|---|
| 8 | Control device of power converter |
| 8A, 8B | Controller |
| 9B | Constant power control circuit |
| 10A, 10B | VDCOL control circuit |
| 11A, 11B | Constant current control circuit (ACR) |
| 12A, 12B | Constant voltage control circuit (AVR) |
| 13A, 13B | Constant margin angle control circuit (AγR) |
| 14A, 14B | Minimum value selection circuit(LVG) |
| 15A, 15B | Pulse generation circuit |
| 16 | Primary delay circuit |
| 17 | Filter circuit |
| 21B | Calculator |
| 22a to 22d | Subtractor |
| 30 | Determination circuit |
| 31 | Current determiner circuit |
| 32 | Voltage determiner circuit |
| 33 | Voltage change determiner circuit |
| 34 | Non-logic circuit |
| 35 | logic AND circuit |
| 36 | logic OR circuit |
| 37 | Switch |
| 41 | VDCOL characteristics |
| 42 | Fixed limiter characteristics |
| 51 | Upper limiter |
| 52 | Lower limiter |
| 53 | Filter circuit |

**Claims**

1. A control device of power converters that perform power conversion between two AC systems connected together via a DC line, the power converter operating as a rectifier, and the power converter operating as an inverter, the control device comprising:

   a constant power control circuit outputting a control angle so as to cause DC power to follow a DC power set value;
   a VDCOL control circuit having VDCOL characteristics limiting a DC current instruction value based on a DC voltage;
   a constant current control circuit outputting a control angle so as to cause a DC current at the DC line to follow the DC current set value set based on the VDCOL characteristics;
   a constant voltage control circuit outputting a control angle so as to cause the DC voltage of the DC line to follow a DC voltage set value;
   a constant margin angle control circuit outputting a control angle so as to make a margin angle for the power converter constant, and
   a minimum value selection circuit setting, as the control angle for the power converter, the minimum value of the control angles for the constant current control circuit, the constant voltage control circuit, and the constant margin angle control circuit, wherein:

   the VDCOL control circuit has different VDCOL characteristics at the rectifier side and the inverter side, respectively; and
   the each VDCOL characteristic has two break points of high and low for the DC voltage, an upper limit value of the DC current instruction value within a region between the high and low break points is set to be lower at the inverter side than the rectifier side, and the low break points of the respective VDCOL characteristics are consistent, the upper limit value of the DC current instruction value within the region equal to or smaller than the low break point is set to be lower at the inverter side than the rectifier side.

2. The power converter control device according to claim 1, wherein the each VDCOL characteristic is set to have the low break point at the inverter side higher than the low break point at the rectifier side.

3. The power converter control device according to claims 1 or 2, wherein, in the VDCOL control circuit, primary delay circuits are provided at the rectifier side and the inverter side respectively, and a time constant of the primary delay circuit at a time of fault recovery is set to be higher at the inverter side than the rectifier side.

4. The power converter control device according to any one of claims 1 to 3, wherein:

   the VDCOL control circuit has the VDCOL characteristics as a first characteristic and, as a second characteristic, fixed limiter characteristics having a constant limit value for the DC current instruction value relative to the DC voltage set to be a higher level at the rectifier side than the inverter side;
   the control device further comprises:

   a current level determiner determining whether the DC current instruction value exceeds a first preset threshold or not;
   a voltage level determiner determining whether the DC voltage is smaller than a second preset threshold or not; and
   a switch changing the characteristics between the first characteristic and the second characteristic based on determination results by the current level determiner and the voltage level determiner, and

   when the current level determiner determines that the DC current instruction value is equal to or smaller than the first preset threshold, and the voltage level determiner determines that the DC voltage is smaller than the second preset threshold, the switch changes the characteristics to the second characteristic.

5. The control device of power converter according to any one of claims 1 to 3, wherein:

the VDCOL characteristic is an upper limiter for defining the upper limit value of the DC current instruction value;
the VDCOL control circuit is provided with, in addition to the upper limiter, a lower limiter for defining the lower limit value of the DC current instruction value; and
the lower limiter has different characteristics at the rectifier side and the inverter side, and the two break points of high and low, respectively, for the DC voltage, and within the region equal to or smaller than the high break point, the lower limit value of the DC current instruction value is set to be higher at the rectifier side than the inverter side.

**Patentansprüche**

1. Steuerungsvorrichtung von Leistungswandlern, die eine Leistungsumwandlung zwischen zwei Wechselstromsystemen, die über eine Gleichstromleitung verbunden sind, durchführen, wobei der Leistungswandler als ein Gleichrichter arbeitet und der Leistungswandler als ein Wechselrichter arbeitet, die Steuerungsvorrichtung umfassend:

eine Konstantleistungsteuerschaltung, die einen Steuerwinkel ausgibt, um zu bewirken, dass Gleichstromleistung einem Gleichstromleistungssollwert folgt;
eine VDCOL-Steuerschaltung, die VDCOL-Charakteristiken aufweist, die einen Gleichstromanweisungswert basierend auf einer Gleichspannung begrenzen;
eine Konstantstromsteuerschaltung, die einen Steuerwinkel ausgibt, um zu bewirken, dass ein Gleichstrom an der Gleichstromleitung einem Gleichstromsollwert folgt, der basierend auf den VDCOL-Charakteristiken einstellt ist;
eine Konstantspannungsteuerschaltung, die einen Steuerwinkel ausgibt, um zu bewirken, dass die Gleichspannung der Gleichstromleitung einem Gleichspannungssollwert folgt;
eine Konstantlöschwinkelsteuerschaltung, die einen Steuerwinkel ausgibt, um einen Löschwinkel für den Leistungswandler konstant einzustellen, und
eine Mindestwertauswahlschaltung, die als Steuerwinkel für den Leistungswandler den Mindestwert der Steuerwinkel für die Konstantstromsteuerschaltung, die Konstantspannungsteuerschaltung und die Konstantlöschwinkelsteuerschaltung einstellt, wobei:

die VDCOL-Steuerschaltung an der Gleichrichterseite beziehungsweise der Wechselrichterseite verschiedene VDCOL-Charakteristiken aufweist; und
die jeweilige VDCOL-Charakteristik zwei Knickpunkte von hoch und niedrig für die Gleichsspannung aufweist, wobei ein oberer Grenzwert des Gleichstromanweisungswerts innerhalb eines Bereichs zwischen den hohen und niedrigen Knickpunkten so eingestellt ist, dass er auf der Wechselrichterseite niedriger ist als auf der Gleichrichterseite, und wobei die niedrigen Knickpunkte der jeweiligen VDCOL-Charakteristiken konsistent sind, wobei der obere Grenzwert des Gleichstromanweisungswerts innerhalb des Bereichs, der gleich oder kleiner als der niedrige Knickpunkt ist, so eingestellt ist, dass er auf der Wechselrichterseite niedriger ist als auf der Gleichrichterseite.

2. Leistungswandler-Steuerungsvorrichtung nach Anspruch 1, wobei jede VDCOL-Charakteristik so eingestellt ist, dass der niedrige Knickpunkt auf der Wechselrichterseite höher ist als der niedrige Knickpunkt auf der Gleichrichterseite.

3. Leistungswandler-Steuerschaltung nach Anspruch 1 oder 2, wobei in der VDCOL-Steuerschaltung primäre Verzögerungsschaltungen auf der Gleichrichterseite beziehungsweise der Wechselrichterseite bereitgestellt sind und eine Zeitkonstante der primären Verzögerungsschaltung zu einem Zeitpunkt der Fehlerbehebung so eingestellt ist, dass sie auf der Wechselrichterseite höher ist als auf der Gleichrichterseite.

4. Leistungswandler-Steuerungsvorrichtung nach einem der Ansprüche 1 bis 3, wobei:

die VDCOL-Steuerschaltung die VDCOL-Charakteristiken als eine erste Charakteristik aufweist, und als eine zweite Charakteristik feste Begrenzerkennlinien mit einem konstanten Grenzwert für den Gleichstromanweisungswert relativ zu der Gleichspannung, die auf der Gleichrichterseite auf einen höheren Pegel eingestellt ist als auf der Wechselrichterseite;
wobei die Steuerungsvorrichtung ferner umfasst:

eine Strompegelbestimmungsvorrichtung, die bestimmt, ob der Gleichstromanweisungswert einen ersten voreingestellten Schwellenwert überschreitet oder nicht; eine Spannungspegelbestimmungsvorrichtung, die bestimmt, ob die Gleichspannung kleiner als ein zweiter voreingestellter Schwellenwert ist oder nicht; und einen Schalter, der die Charakteristiken zwischen der ersten Charakteristik und der zweiten Charakteristik basierend auf Bestimmungsergebnissen der Strompegelbestimmungsvorrichtung und der Spannungspegelbestimmungsvorrichtung ändert, und

wenn die Strompegelbestimmungsvorrichtung bestimmt, dass der Gleichstromanweisungswert gleich oder kleiner als der erste voreingestellte Schwellenwert ist und die Spannungspegelbestimmungsvorrichtung bestimmt, dass die Gleichspannung kleiner als der zweite voreingestellte Schwellenwert ist, der Schalter die Charakteristiken auf die zweite Charakteristik ändert.

5. Steuerungsvorrichtung eines Leistungswandlers nach einem der Ansprüche 1 bis 3, wobei:

die VDCOL-Charakteristik ein oberer Begrenzer zum Festlegen des oberen Grenzwerts des Gleichstromanweisungswerts ist; die VDCOL-Steuerungsschaltung zusätzlich zum oberen Begrenzer mit einem unteren Begrenzer zum Festlegen eines unteren Grenzwerts des Gleichstromanweisungswerts bereitgestellt ist; und der untere Begrenzer unterschiedliche Charakteristiken auf der Gleichrichterseite und der Wechselrichterseite und die beiden Knickpunkte von hoch beziehungsweise niedrig für die Gleichspannung aufweist, und innerhalb des Bereichs, der gleich oder kleiner als der hohe Knickpunkt ist, der untere Grenzwert des Gleichstromanweisungswerts auf der Gleichrichterseite höher eingestellt ist als auf der Wechselrichterseite.

**Revendications**

1. Dispositif de commande de convertisseurs de puissance effectuant une conversion de puissance entre deux systèmes de courant alternatif raccordés l'un à l'autre par l'intermédiaire d'une ligne de courant continu, le convertisseur de puissance fonctionnant en tant que redresseur, et le convertisseur de puissance fonctionnant en tant qu'onduleur, le dispositif de commande comprenant :

un circuit de commande de puissance constante délivrant un angle de commande de manière à amener une puissance de courant continu à suivre une valeur de consigne de puissance de courant continu ; un circuit de commande VDCOL comportant des caractéristiques VDCOL limitant une valeur d'instruction de courant de courant continu sur la base d'une tension de courant continu ; un circuit de commande de courant constant délivrant un angle de commande de manière à amener un courant continu à la ligne de courant continu à suivre la valeur de consigne de courant continu réglée sur la base des caractéristiques VDCOL ; un circuit de commande de tension constante délivrant un angle de commande de manière à amener la tension de courant continu de la ligne de courant continu à suivre une valeur de consigne de tension de courant continu ; un circuit de commande d'angle de marge constant délivrant un angle de commande de manière à rendre un angle de marge pour le convertisseur de puissance constant, et un circuit de sélection de valeur minimale réglant, en tant que l'angle de commande pour le convertisseur de puissance, la valeur minimale des angles de commande pour le circuit de commande de courant constant, le circuit de commande de tension constante et le circuit de commande d'angle de marge constant, dans lequel :

le circuit de commande VDCOL comporte différentes caractéristiques VDCOL respectivement du côté redresseur et du côté onduleur ; et chaque caractéristique VDCOL comporte deux points de rupture haut et bas pour la tension de courant continu, une valeur de limite supérieure de la valeur d'instruction de courant de courant continu à l'intérieur d'une région entre les points de rupture haut et bas est réglée pour être inférieure du côté onduleur par rapport au côté redresseur, et les points de rupture bas des caractéristiques VDCOL respectives sont cohérents, la valeur de limite supérieure de la valeur d'instruction de courant de courant continu à l'intérieur de la région inférieure ou égale au point de rupture bas est réglée pour être inférieure du côté onduleur par rapport au côté redresseur.

2. Dispositif de commande de convertisseurs de puissance selon la revendication 1, dans lequel chaque caractéristique VDCOL est réglée pour que le point de rupture bas du côté onduleur soit supérieur au point de rupture bas du côté redresseur.

**3.** Dispositif de commande de convertisseurs de puissance selon la revendication 1 ou 2, dans lequel, dans le circuit de commande VDCOL, des circuits de retard primaires sont prévus respectivement du côté redresseur et du côté onduleur, et une constante de temps du circuit de retard primaire à un temps de reprise après défaut est réglée pour être supérieure du côté onduleur par rapport au côté redresseur.

**4.** Dispositif de commande de convertisseurs de puissance selon l'une quelconque des revendications 1 à 3, dans lequel :

le circuit de commande VDCOL comporte les caractéristiques VDCOL en tant qu'une première caractéristique et, en tant qu'une deuxième caractéristique, des caractéristiques de limiteur fixes comportant une valeur de limite constante pour la valeur d'instruction de courant de courant continu par rapport à la tension de courant continu réglée pour être à un niveau supérieur du côté redresseur par rapport au côté onduleur ;
le dispositif de commande comprend en outre :

un déterminateur de niveau de courant déterminant si la valeur d'instruction de courant de courant continu dépasse ou non un premier seuil préréglé ;
un déterminateur de niveau de tension déterminant si la tension de courant continu est inférieure ou non à un deuxième seuil préréglé ; et
un commutateur changeant les caractéristiques entre la première caractéristique et la deuxième caractéristique sur la base de résultats de détermination par le déterminateur de niveau de courant et le déterminateur de niveau de tension, et

lorsque le déterminateur de niveau de courant détermine que la valeur d'instruction de courant de courant continu est inférieure ou égale au premier seuil préréglé et le déterminateur de niveau de tension détermine que la tension de courant continu est inférieure au deuxième seuil préréglé, le commutateur change les caractéristiques à la deuxième caractéristique.

**5.** Dispositif de commande de convertisseurs de puissance selon l'une quelconque des revendications 1 à 3, dans lequel :

la caractéristique VDCOL est un limiteur supérieur pour définir la valeur de limite supérieure de la valeur d'instruction de courant de courant continu ;

le circuit de commande VDCOL est pourvu, en complément du limiteur supérieur, d'un limiteur inférieur pour définir la valeur de limite inférieure de la valeur d'instruction de courant de courant continu ; et

le limiteur inférieur comporte des caractéristiques différentes du côté redresseur et du côté onduleur, et les deux points de rupture haut et bas respectivement pour la tension CC, et à l'intérieur de la région inférieure ou égale au point de rupture haut, la valeur de limite inférieure de la valeur d'instruction de courant de courant continu est réglée pour être supérieure du côté redresseur par rapport au côté onduleur.

**FIG. 1**

**FIG. 2**

FIG. 3

(a) DC VOLTAGE

VdREC EXAMPLE
VdINV EXAMPLE
VdREC CONVENTIONAL TECHNOLOGY
VdINV CONVENTIONAL TECHNOLOGY

CONVENTIONAL TECHNOLOGY HAS FASTER INCREASE IN DC VOLTAGE

(b) DC CURRENT

IdREC EXAMPLE
IdINV EXAMPLE
IdREC CONVENTIONAL TECHNOLOGY
IdINV CONVENTIONAL TECHNOLOGY

CABLE IS CHARGED BY CURRENT DIFFERENCE BETWEEN REC AND INV

(C) AC POWER

RECOVERY TIME 0. 84s

RECOVERY TIME 3. 52s

90 % OF INITIAL POWER

VdREC EXAMPLE
VdINV EXAMPLE
VdREC CONVENTIONAL TECHNOLOGY
VdINV CONVENTIONAL TECHNOLOGY

TIME [s]

EP 3 261 208 B1

**FIG. 4**

**FIG. 5**

**FIG. 6**

**FIG. 7**

**FIG. 8**

*FIG. 9*

*FIG. 10*

EP 3 261 208 B1

10A,10B

FIG. 11

FIG. 12

**FIG. 13**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2012250371 A

### Non-patent literature cited in the description

- Selection of Dynamic Performance Control Parameters for Classic HVDC in PSSE Optimization of CCA and VDCOL parameters. *Arunkumar Muthusamy, Master of Science Thesis, Department of Electric Power Engineering, Division of Energy and Environment, Chalmers University of Technology,* 2011